# EUROPEAN PATENT SPECIFICATION

(11) **EP 1 807 891 B1**
(45) Date of publication and mention of the grant of the patent: **05.08.2009**
(21) Application number: 05805664.9
(22) Date of filing: 02.11.2005
(51) Int. Cl.: H01M 4/86, H01M 8/10, H01M 2/08

(54) **METHODS FOR FABRICATING MEMBRANE ELECTRODE ASSEMBLIES OF FUEL CELLS**
VERFAHREN ZUR HERSTELLUNG VON MEMBRANELEKTRODENANORDNUNGEN FÜR BRENNSTOFFZELLEN
PROCÉDÉS DE FABRICATION D ENSEMBLES D ÉLECTRODES À MEMBRANE POUR PILES À COMBUSTIBLES

(30) Priority: 03.11.2004 CN 200410052120
(43) Date of publication of application: 18.07.2007
(73) Proprietor: Byd Company Limited, Shenzhen, Guangdong 518119 (CN)
(72) Inventor: WANG, Chuanfu, Shenzhen, Guangdong 518119 (CN); DONG, Junqing, Shenzhen, Guangdong 518119 (CN)
(74) Representative: Stenbäck, Maria Elisabeth
(86) International application number: PCT/CN2005/001832
(87) International publication number: WO 2006/047950

(56) References cited:
- WO-A-02/093669
- CN-A- 1 476 646
- CN-A- 1 527 425
- CN-Y- 2 475 144
- JP-A- 11 045 729
- US-A- 6 020 083
- US-A1- 2001 001 052
- US-B2- 6 399 234

## Description

### Cross Reference

This application claims priority from a Chinese patent application entitled "Methods for the Fabrication of Membrane Electrode Assemblies of Fuel Cells with Integrated Structure" filed on "November 3, 2004," having a Chinese Application No. 200410052120.2. The above application is incorporated herein by reference.

### Field of Invention

This invention relates to fuel cells. Particularly, it relates to the fabrication methods for membrane electrode assemblies of fuel cells with integrated structure.

### Background

Fuel cells are energy conversion devices that transform the chemical energy of fuels such as hydrogen and alcohols and oxidants such as oxygen into electric energy. They have a high energy conversion rate and are environmentally friendly. In addition, proton exchange membrane fuel cells (PEMFC) operate at low temperatures and a high specific power. Therefore, PEMFC can be used as an independent power generator as well as a mobile power source in automobile, submarines, and other transportation equipment.

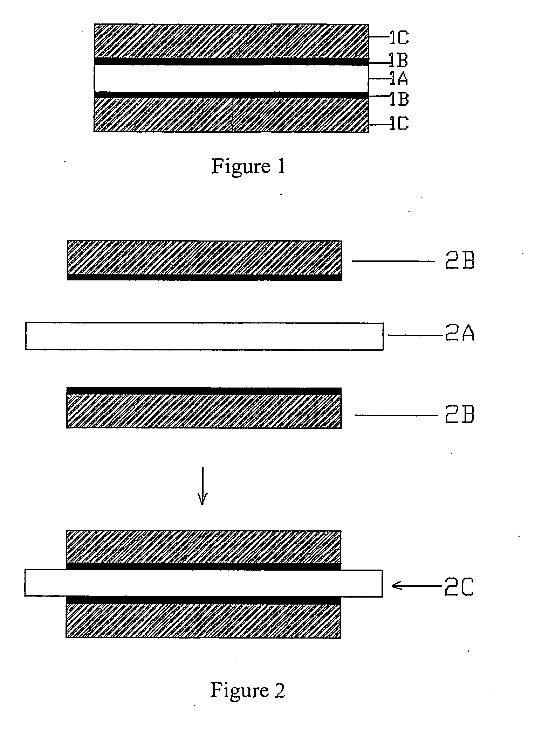

Membrane electrode assemblies (MEA) are the core units for fuel cells where fuels and oxidants chemically react to produce electrical energy. A membrane electrode assembly with only catalyst layers and a proton exchange membrane is called a 3- layered membrane electrode assembly or a catalyst coated membrane (CCM). A membrane electrode assembly with gas diffusion layers, catalyst layers, and a membrane is called a 5-layered membrane electrode assembly. Figure 1 shows a typical 5-layered membrane electrode assembly where 1A is the proton exchange membrane, 1 B is the catalyst layer, and 1C is the gas diffusion layer.

Traditional 5-layered membrane electrode assemblies are fabricated by directly hot-pressing gas diffusion layers with the proton membrane. In Fig. 2, 2A is the proton exchange membrane, 2B is the gas diffusion electrode that includes the catalyst layer, and 2C is the fabricated 5 layered membrane electrode assembly after hot pressing. This type of membrane electrode assembly is simple to fabricate. However, they also have a number of disadvantages. During the operation of the fuel cell, the hydration and dehydration of the proton exchange membrane will cause the membrane to distort because of its expansion and contraction such that the dimensions of the membrane electrode assembly are unstable. This distortion of the proton exchange membrane also affects the stability of the sealing structure. Repeated distortions can also damage the proton membrane resulting in the leakage of the gases. If the thread sealing method is used for sealing, the pressure of the sealing components is concentrated on a thread. This will cause the underlying stress of the proton membrane to be more concentrated and can easily lead to the rupture of the proton membrane. As a result, the life of the membrane electrode assembly is shortened and the safety and stability of the fuel cell is affected. This 5-layer structure also requires the proton exchange membrane to have a supplementary sealing function. Therefore, the proton exchange membrane has to extend to a larger area beyond the active area resulting in increased cost for the membrane. Lastly, the proton exchange membrane is in direct contact with the sealing material and will corrode the material because of its acidity.

To solve these problems, attempts have been made to paste a layer of inert protection membrane frame (protection frame) on the surface of the proton exchange membrane that is extended from the membrane electrode assembly. The extended proton exchange membrane and protection membrane frame are bound with a binding agent, usually a hot melt adhesive that is hot-pressed at the same time when the membrane electrode assembly is hot-pressed. This protection frame stabilizes the dimensions of the membrane electrode assembly and reduces the distortion at the edge of the proton exchange membrane. It separates the proton exchange membrane and sealing material and reduces the corrosion of the sealing material by the proton exchange membrane. If the thread sealing method is used, this protection membrane frame can, up to a point, resist the pressure that is concentrated at the sealing thread. However, the proton exchange membrane is still under pressure and can be severely distorted at the seam between the protection membrane frame and the carbon paper such that it can easily crimp. If the proton exchange membrane is thin, it can even be damaged by the pressure. Moreover, it is very difficult to align the protection membrane frame and the carbon paper precisely, particularly when the individual fiber of the carbon paper is slightly longer. The protruding carbon fiber can be pressed into the proton exchange membrane, causing damage to the proton exchange membrane. Therefore, despite the protection frame membrane, the life of this type of membrane electrode assembly is still limited.

Chinese patent CN2588552 disclosed a method for fabricating a membrane electrode assembly that includes a sealing area and an active area. The center part is the active area and it includes the proton exchange membrane and the porous gas diffusion electrode coated with catalyst layer. Surrounding it is the sealed area, which is comprised of carbon paper infiltrated by hot melt adhesive, rubber, or resin, and additional hot melt adhesive, rubber, or resin acting as a cushion. This hot melt adhesive, rubber, or resin is infiltrated into the carbon paper during the hot-pressing of the 5-layered membrane assembly, sealing the sealing area of the carbon paper of the sealing area of the carbon paper. The active and sealing area of the carbon paper for the membrane electrode assembly are integrated as one. The sealing area of the carbon paper also protects the protection frame. Therefore, the proton exchange membrane is also protected from damage at the seam between the protection membrane frame and the carbon paper. However, using this fabrication method, it is difficult to control the hot melt adhesive to uniformly melt and infiltrate the carbon paper while hot pressing the 5 layered membrane electrode assembly. In addition, the pressure for directly hot pressing the 5 layered membrane electrode assembly (5-10MPa) is high. Such a high pressure can cause damage to the proton exchange membrane. It can also easily cause the distortion of the carbon paper at the sealing area.

Another Chinese patent, CN1476646, disclosed the structure and fabrication method of a type of membrane electrode assembly. The gas diffusion electrode of this membrane electrode assembly is divided into an active area and a sealing area. The area surrounding the carbon paper is the sealing area. This sealing area is immersed in the liquefied rubber. After solidification, the rubber forms a composite structure with a sealing function. A frame that functions as a cushion can be formed at the rim of the carbon paper. The immersed rubber is glued to the frame to form an integrated structure of the gas diffusion layer and the protection membrane frame. The structure is pressed to obtain the membrane electrode assembly. This method does not damage the carbon paper. In addition, the integration of the immersed rubber and carbon paper is better. However, the solidification process of the liquefied rubber is long, taking about 6 to 12 hours. In addition, during the solidification process, the rubber soaked in the carbon paper will shrink to form a gap, resulting in gas leakage. Other sealing structures have to be added to further seal this membrane electrode assembly.

US patents US6159628 and US6399234 disclosed the structure and fabrication method for another membrane electrode assembly. The gas diffusion electrodes of the membrane electrode assemblies are divided into an active area and-sealing area. The area surrounding the carbon paper is the sealing area. The sealing area is formed by a plasticization process where a thermoplastic polymer KYNAR® membrane is melted and mold-pressed to infiltrates the gas diffusion layer. This "plasticized" frame acts as a protection membrane frame and seals the carbon paper. The gas diffusion unit and the catalyst coated membrane are bound by a hot melt adhesive membrane to form the membrane electrode assembly unit. A relatively low pressure can be used for the binding thus reducing the potential for damage to the proton membrane. Problems still exist in the fabrication method. The fabrication method is complicated and the efficiency of the equipment for the "plasticization" is very low as each piece of equipment can only "plasticize" one gas diffusion layer at a time. More importantly, the mold pressing technology damages the carbon paper. Therefore, this fabrication method cannot form a good composite structure of the melt permeated KYNAR® membrane and the carbon paper. The "plasticized" frame is weak and has relatively high gas permeability coefficients in the longitudinal direction. This will affect the stability of the membrane electrode assembly during its operation life. In addition, a significant amount of expensive material is discarded and wasted since only the rim of the KYNAR® membrane and the hot melt membrane is used. US 2001/001052A1 belongs to the same patent family as US6159628 and US6399234 and discloses a method for fabricating a membrane electrode assembly, comprising the steps of : dividing a substrate into at least one active region and a peripheral sealing region; fabricating a gas diffusion layer on said active region; casting a resin material on said sealing region to form a sealing "membrane"; and assembling at least one of said substrate having said gas diffusion layer and sealing membrane with a catalyst coated membrane to form said membrane electrode assembly.

Due to the limitations of the prior art, it is therefore desirable to have novel methods of fabricating membrane electrode assemblies of fuel cells that have an integrated structure, are stable and inexpensive.

### Summary of Invention

An object or this invention is to provide methods for fabricating membrane electrode assemblies of fuel cells such that the structure of the membrane electrodes fabricated are stable.

Another object of this invention is to provide fabrication methods that reduce the potential for damage to the proton membrane and increase the lifespan of the membrane.

Another object of this invention is to provide methods for fabricating membrane electrode assemblies of fuels cells that reduce the quantity and cost of the materials used.

Another object of this invention is to improve the efficiency of the fabrication process such that the methods of this invention can be implemented for mass production.

Briefly, the present invention provides methods for fabricating membrane electrode assemblies. The fabrication of a gas diffusion unit for an electrode with a hot melt adhesive layer for a membrane electrode assembly include the steps of: fabricating a gas diffusion layer on the center active region of a substrate; casting a resin material on the rim region of the substrate to form a sealing region; hot-pressing the substrate having the gas diffusion layer and sealing region; and assembling at least one of said substrate having said gas diffusion layer and sealing region with a catalyst coated membrane to form said membrane electrode assembly.

An advantage of the fabrication methods of this invention is that they fabricate membrane electrode assemblies of fuel cells with a stable structure.

Another advantage of the fabrication methods of this invention is that these methods reduce the potential for damage to the proton membrane and increase the lifespan of the membrane.

Another advantage of the fabrication methods of this invention is that they reduce the quantity and cost of materials used.

Another advantage of the fabrication methods of this invention is that the methods are efficient and can be implemented for mass production.

### Description of Drawings

The foregoing and other objects, aspects and advantages of the invention will be better understood from the following detailed description of preferred embodiments of this invention when taken in conjunction with the accompanying drawings in which:

Fig. is a schematic structure diagram of an example of a 5-layered membrane electrode assembly.

Fig. 2 is a schematic diagram of an example of a fabrication method for a 5-layered membrane electrode assembly.

Fig. 3 is a schematic structure diagram of an embodiment of a membrane electrode assembly fabricated by a method of this invention.

### Detailed Description of the Preferred Embodiments

Presently preferred methods for fabricating the gas diffusion unit for an electrode of a membrane electrode assembly of the present invention include the following steps: (a) fabricating a gas diffusion layer on the center active region of a substrate; (b) casting a resin material on the rim region of the substrate to form a sealing region; and (c) hot-pressing the substrate having the gas diffusion layer and sealing region to form a gas diffusion unit with an integrated structure. Preferably, the hot pressing pressure should be lowered than 0.03MPa. The substrate for the gas diffusion layer can be carbon paper. In preferred embodiments, the active region is the center of the substrate while the sealing region encompasses the rim of the substrate.

A method for fabricating a membrane electrode assembly includes the steps of: (a) fabricating one or more hot melt adhesive layer at said sealing region or regions on one or both sides of the gas diffusion unit for an electrode to form a gas diffusion unit for an electrode with hot melt adhesive layers; (b) placing the positive and negative gas diffusion unit for an electrode with hot melt adhesive layers of separate sides of proton exchange membrane coated with catalyst layers; and (c) hot-pressing the assembled unit. Preferably, the hot-pressing should be conducted at low pressure. Good results are observed when the hot-pressing pressure is less than 1MPa and the temperature is between 120°C and 180°C.

The hot melt adhesive can be fabricated by spraying, coating, screen printing, immersing, soaking or dripping a liquid hot melt adhesive at the sealing region to form the hot melt adhesive layer. In the alternative, the hot melt adhesive membrane can first be transferred to the sealing region of the gas diffusion unit. Then the release membrane of the hot melt adhesive membrane is peeled off to form said hot melt adhesive layer. The hot melt adhesive of said hot melt adhesive layer can be one of the following: polyaminoesters, ethylene - vinyl acetate polymers and polyamides. Preferably, the thickness of said hot melt adhesive layer is between 1 micron and 100 microns, and more preferably between 5 microns and 50 microns.

In preferred methods, the casting of said resin material on the rim region includes the steps of: (a) placing a mold for the rim regions on said substrate where the apertures of the mold corresponds to the rim regions of the substrate; (b) aligning the apertures of the mold to the rim regions; (c) pouring the resin material onto the rim region through the aperture in the mold; and volatizing the resin material at a controlled temperature to form said sealing region.

Preferably, the resins in the material having solvent should be chemically and thermally stable and soluble in low toxic or nontoxic solvents. Thus, the resin material can comprise of one or more resins selected from the following group: soluble polysulfone, poly-ether-ketones, polyamides, polyimides, polyolefins, fluoropolymers and block polymer. The optimal selection for the resin is polyvinylethylene fluoride resin. The concentration of the resin in said resin material is between 5% and 50%. Preferably, the resin material can also contain of one or more of the following solvents that the resin is dissolved in: ethers, sulfones, ketones or amides. When the resin in the resin material is polyvinylethylene fluoride, the optimal selection for the solvent is dimethyl formamide.

One method for forming the gas diffusion layer include the following steps: (a) spraying or vacuum-infiltrating polytetrafluoroethylene into the active region of the substrate until the concentration of said polytetrafluoroethylene resin in the substrate is between 1% and 60%; (b) drying at a temperature of between 340°C and 360°C for 20 minutes to 60 minutes; (c) mixing, preferably with a high speed dispersion equipment, the dispersion of a hydrophobic first resin, carbon, and, alcohol or water in the weight ratio of 1~5:1~5: 10~100 for 10~60 minutes uniformly and treating with ultrasound for 10 minutes to 60 minutes to form an ink-like mixture that does not contain any precipitates; (d) placing the mixture in the active region such that the concentration of the first resin in the substrate is between 0% and 70%. The placing of said mixture can be implemented by the spraying, vacuum-infiltrating, coating, immersing, or immersing with vibration. The optimal method for is by spraying or vacuum infiltration; and (e) drying with heat for 10 to 100 minutes to form a gas diffusion layer that can be 1 micron to 100 microns thick and has a cavity rate of 20-80%.

The following embodiments further describe this invention.

### Embodiment 1

### Fabrication of the Gas Diffusion Layer

In this embodiment, the substrate is TORRY carbon paper TCP-H-090. This substrate is divided into a predetermined rim region and an active region. The rim region, at the rim of the substrate is reserved for later treatment. The gas diffusion layer is fabricated as follows:
spray-coating a 10 wt.% concentration of polytetrafluoroethylene dispersion onto the center active region until the concentration of the polytetrafluoroethylene is 10%; drying the carbon paper with heat at a temperature of 350°C for 15 minutes, cooling naturally;
mixing 1 unit (by weight) of the polytetrafluoroethylene dispersion, 3 units (by weight) of black carbon powder and 100 units (by weight) of deionized water uniformly by using a ball mill for 30 minutes;
treating with ultrasound for 20 minutes to form a stable, "ink-like" mixture that does not contain any precipitates;
roll-coating said ink-like mixture onto the center active region of the substrate to form a micro-pore thin layer 25 microns thick with a cavity ratio of 60%;
drying with heat at a temperature of 350°C for 20 minutes; and
cooling naturally.

### Fabrication of the Gas Diffusion Unit

The fabrication of the gas diffusion unit includes the following steps:
dissolving 1 unit (by weight) of polyvinylethylene fluoride resin in 10 units (by weight) of the solvent dimethyl formamide;
placing a mold on the substrate with the gas diffusion layer and aligning the reserved rim region of the substrate casting area (aperture) of the mold;
pouring the polyvinylidene fluoride resin solution at the casting area of the mold;
volatilizing the solvent at a temperature of 110°C to form sealing region on said rim region;
hot-pressing the gas diffusion layer with sealing region at a temperature to 190°C and a pressure of 0.02MPa for 5 minutes;
removing and cooling to obtain the gas diffusion unit with a stable integrated structure.

### Assembly of the 5-layered Membrane Electrode Assembly

The method for the assembly includes:
spray-coating the hot melt coat onto the gas diffusion unit at the sealing regions on the same side of the gas diffusion unit and the gas diffusion layer.
hot- pressing the gas diffusion unit of the positive and negative electrodes with the catalyst coated membrane for 3 minutes at a temperature of 130 °C and pressure of 0.1MPa to obtain the 5-layered membrane electrode assembly with the integrated structure.

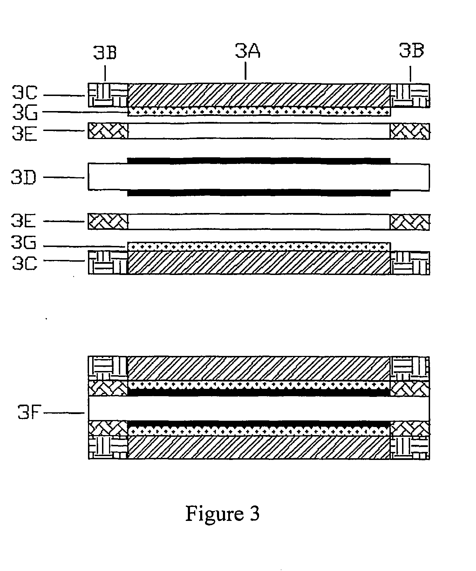

The diagram of the structure of the membrane electrode assembly fabricated by the methods of Embodiment 1 is illustrated in Fig. 3. In the figure, 3A is the active region; 3B is the sealing region; 3C is the gas diffusion unit; 3E is the hot melt adhesive layer; 3G is the gas diffusion layer, 3D is the catalyst coated membrane; and 3F is the assembled membrane electrode assembly.

### Embodiment 2

### Fabrication of the Gas Diffusion Layer

In this embodiment, the substrate is TORRY carbon paper TCP-H-060. This substrate is divided into a predetermined rim region and an active region. The rim region, at the rim of the substrate is reserved for later treatment. The gas diffusion layer is fabricated as follows:
vacuum infiltrating at a pressure of 0.01 MPa to uniformly coat a 10 wt.% concentration of polytetrafluoroethylene dispersion onto the center active region until the concentration of the polytetrafluoroethylene is 10%;
drying the carbon paper with heat at a temperature of 350°C for 15 minutes, cooling naturally;
mixing 1 unit (by weight) of the polytetrafluoroethylene dispersion, 3 units (by weight) of Vulcan-XC-72 carbon powder and 100 units (by weight) of deionized water for 30 minutes until uniformly mixed;
treating with ultrasound for 20 minutes to form a stable, "ink-like" mixture that does not contain any precipitates;
coating said ink-like mixture onto the center active region of the substrate with a scraper to form a micro-pore thin layer that is 22 microns thick with a cavity ratio of 50%;
drying with heat at a temperature of 350°C for 20 minutes; and
cooling naturally.

### Fabrication of the Gas Diffusion Unit

The fabrication of the gas diffusion unit includes the following steps:
dissolving 1 unit (by weight) of polyvinylethylene fluoride resin in 4 units (by weight) of the solvent N-methyl pyrrolidinone (NMP);
placing a mold on the substrate with the gas diffusion layer and aligning the reserved rim region of the substrate casting area (aperture) of the mold;
pouring the polyvinylidene fluoride resin solution at the casting area of the mold;
volatilizing the solvent at a temperature of 110°C to form sealing region on said rim region;
hot-pressing the gas diffusion layer with sealing region at a temperature to 170°C and a pressure of 0.03MPa for 5 minutes;
removing and cooling to obtain the gas diffusion unit with a stable integrated structure.

### Assembly of the 5-layered Membrane Electrode Assembly

The method for the assembly includes:
cutting a hot melt adhesive membrane TBF-615 (or other 3M Corporation's hot melt adhesive membrane) to the same shape and size as the sealing region;
aligning the hot melt adhesive membrane to the sealing region;
hot-pressing the membrane onto the gas diffusion unit at the sealing region at 130°C to transfer the membrane to the sealing region;
hot- pressing the gas diffusion unit of the positive and negative electrodes with the catalyst coated membrane for 1 minute at a temperature of 130 °C and pressure of 0.1MPa to obtain the 5-layered membrane electrode assembly with the integrated structure.

### Embodiment 3

### Fabrication of the Gas Diffusion Layer

In this embodiment, the substrate is carbon paper GDL 30 BA from SGL Company. This substrate is divided into a predetermined rim region and an active region. The rim region, at the rim of the substrate is reserved for later treatment. The gas diffusion layer is fabricated as follows:
mixing 1 unit (by weight) of the polytetrafluoroethylene dispersion, 3 units (by weight) of Vulcan-XC-72 carbon powder, and 100 units (by weight) of deionized water for 30 minutes until uniformly mixed;
treating with ultrasound for 20 minutes to form a stable, "ink-like" mixture that does not contain any precipitates;
coating said ink-like mixture onto the center active region of the substrate with a scraper to form a micro-pore thin layer that is 22 microns thick with a cavity ratio of 50%;
drying with heat at a temperature of 350°C for 20 minutes; and
cooling naturally.

### Fabrication of the Gas Diffusion Unit

The fabrication of the gas diffusion unit includes the following steps:
dissolving 1 unit (by weight) of polynaphtfol diphenylether polysulfides resin in 9 units (by weight) of the solvent dimethyl acetamide (DMAc);
placing a mold on the substrate with the gas diffusion layer and aligning the reserved rim region of the substrate casting area (aperture) of the mold;
pouring the polynaphtfol diphenylether polysulfides resin solution at the casting area of the mold;
volatilizing the solvent at a temperature of 110°C to form sealing region on said rim region;
hot-pressing the gas diffusion layer with sealing region at a temperature to 250°C and a pressure of 0.02MPa for 5 minutes;
removing and cooling to obtain the gas diffusion unit with a stable integrated structure.

### Assembly of the 5-layered Membrane Electrode Assembly

The method for the assembly includes:
cutting a hot melt adhesive membrane TBF-845EG (or other 3M Corporation's hot melt adhesive membrane) to the same shape and size as the sealing region;
aligning the hot melt adhesive membrane to the sealing region;
hot-pressing the membrane onto the gas diffusion unit at the sealing region at 130°C to transfer the membrane to the sealing region;
hot- pressing the gas diffusion unit of the positive and negative electrodes with the catalyst coated membrane for 0.5 minutes at a temperature of 130 °C and pressure of 0.1MPa to obtain the 5-layered membrane electrode assembly with the integrated structure.

While the present invention has been described with reference to certain preferred embodiments, it is to be understood that the present invention is not limited to such specific embodiments. Rather, it is the inventor's contention that the invention be understood and construed in its broadest meaning as reflected by the following claims. Thus, these claims are to be understood as incorporating not only the preferred embodiments described herein but all those other and further alterations and modifications as would be apparent to those of ordinary skilled in the art.

## Claims

1. A method for fabricating a membrane electrode assembly, comprising the steps of:
fabricating a gas diffusion layer on the center active region of a substrate;
casting a resin material on the rim region of the substrate to form a sealing region;
hot-pressing the substrate having the gas diffusion layer and sealing region; and
assembling at least one of said substrate having said gas diffusion layer and sealing region with a catalyst coated membrane to form said membrane electrode assembly.

2. The method for fabricating a membrane electrode assembly of claim 1 further comprising the step of fabricating a hot melt adhesive layer onto the sealing region wherein said hot melt adhesive layer is assembled with said substrate having said gas diffusion layer and said sealing region and said catalyst coated membrane to form said membrane electrode assembly.

3. The method for fabricating a membrane electrode assembly of claim 1 wherein said resin material comprises of one or more resins selected from the group consisting of:
polysulfone, poly-ether-ketones, polyamides, polyimides, polyolefins, fluoropolymers, and
block polymer, and one or more solvents selected from the group consisting of: ethers, sulfones, ketones and amides.

4. The method for fabricating a membrane electrode assembly of claim 1 wherein said resin material comprises of polyvinylethylene fluoride resin and dimethyl formamide.

5. The method for fabricating a membrane electrode assembly of claim 3 or 4 wherein the concentration of the resin in said resin material is between 5 wt.% and 50 wt.%.

6. The method for fabricating a membrane electrode assembly of claim 1 wherein said casting step further comprising the substeps of:
placing a mold for said rim region on said substrate wherein said mold having aperture corresponding to said rim region of said substrate;
aligning said aperture of said mold to the rim region;
pouring said resin material on said rim region through said aperture in said mold; and
volatizing said resin material to form said sealing region.

7. The method for fabricating a membrane electrode assembly of claim 1 wherein said hot-pressing is conducted at a pressure that is less than 0.03Mpa.

8. The method for fabricating a membrane electrode of claim 2 wherein the hot melt adhesive layer is fabricated by spraying, coating, screen printing, immersing, or dripping a hot melt adhesive on the sealing region.

9. The method for fabricating a membrane electrode of claim 8 wherein the hot melt adhesive of said hot melt adhesive layer is one or more adhesive selected from the group consisting of: polyaminoesters, ethylene - vinyl acetate polymers and polyamides.

10. The method for fabricating a membrane electrode assembly of claim 2 wherein the thickness of said hot melt adhesive layer is between 1 microns and 100 microns.

11. The method for fabricating a membrane electrode assembly of claim 1 wherein the gas diffusion layer is fabricated by the substeps of:
spraying or vacuum-infiltrating polytetrafluoroethylene into said active region of said substrate until the concentration of said polytetrafluoroethylene in said substrate is between 1% and 60%;
drying at a temperature of between 340°C and 360°C for 20 minutes to 60 minutes;
mixing a first resin, carbon, and, alcohol or water in the weight ratio of 1~5: 1~5: 10~100 for 10~60 minutes;
treating with ultrasound for 10 minutes to 60 minutes to form a mixture;
placing said mixture in said active region until the concentration of said first resin in said substrate is between 0% and 70%; and
drying with heat for 10 to 100 minutes to form a gas diffusion layer.

## Patentansprüche

1. Verfahren zur Herstellung einer Membranelektrodenanordnung, umfassend die Schritte des:
Herstellens einer Gasdiffusionsschicht auf dem mittleren aktiven Bereich eines Subtrats;
Gießens eines Harzmaterials auf den Randbereich des Substrats unter Bildung eines Abdichtbereichs;
Heißverpressens des Substrats, das die Gasdiffusionsschicht und den Abdichtbereich aufweist; und
Zusammenfügens mindestens eines von dem Substrat, das die Gasdiffusionsschicht und den Abdichtbereich aufweist, mit einer mit Katalysator beschichteten Membran unter Bildung der Membranelektrodenanordnung.

2. Verfahren zur Herstellung einer Membranelektrodenanordnung nach Anspruch 1, des Weiteren umfassend den Schritt des Herstellens einer Heißschmelzklebstoffschicht auf dem Abdichtbereich, wobei die Heißschmelzklebstoffschicht mit dem Substrat, das die Gasdiffusionsschicht und den Abdichtbereich aufweist, und der mit Katalysator beschichteten Membran unter Bildung der Membranelektrodenanordnung zusammengefügt wird.

3. Verfahren zur Herstellung einer Membranelektrodenanordnung nach Anspruch 1, wobei das Harzmaterial aus einem oder mehreren Harzen ausgewählt aus der Gruppe bestehend aus: Polysulfon, Polyetherketonen, Polyamiden, Polyimiden, Polyolefinen, Fluorpolymeren und Blockpolymeren und einem oder mehreren Lösungsmitteln ausgewählt aus der Gruppe bestehend aus: Ethern, Sulfonen, Ketonen und Amiden besteht.

4. Verfahren zur Herstellung einer Membranelektrodenanordnung nach Anspruch 1, wobei das Harzmaterial Polyvinylethylenfluoridharz und Dimethylformamid umfasst.

5. Verfahren zur Herstellung einer Membranelektrodenanordnung nach Anspruch 3 oder 4, wobei die Konzentration des Harzes in dem Harzmaterial zwischen 5 Gew.-% und 50 Gew.-% liegt.

6. Verfahren zur Herstellung einer Membranelektrodenanordnung nach Anspruch 1, wobei der Gießschritt des Weiteren die folgenden Teilschritte umfasst:
Aufbringen einer Form für den Randbereich auf das Substrat, wobei die Form eine Öffnung aufweist, die dem Randbereich des Substrats entspricht; Ausrichten der Öffnung der Form auf den Randbereich;
Gießen des Harzmaterials auf den Randbereich durch die Öffnung in der Form;
und
Verflüchtigen des Harzmaterials unter Bildung des Abdichtbereichs.

7. Verfahren zur Erstellung einer Membranelektrodenanordnung nach Anspruch 1, wobei das Heißverpressen bei einem Druck durchgeführt wird, der weniger als 0,03 MPa beträgt.

8. Verfahren zur Herstellung einer Membranelektrodenanordnung nach Anspruch 2, wobei die Heißschmelzklebstoffschicht durch Spritzen, schichtförmiges Aufbringen, Siebdruck, Eintauchen oder tropfenweises Aufbringen eines Heißschmelzklebstoffs auf den Abdichtbereich hergestellt wird.

9. Verfahren zur Herstellung einer Membranelektrodenanordnung nach Anspruch 8, wobei der Heißschmelzklebstoff der Heißschmelzklebstoffschicht aus einem oder mehreren Klebstoffen besteht ausgewählt aus der Gruppe bestehend aus: Polyaminoestern, Ethylen-Vinylacetat-Polymeren und Polyamiden.

10. Verfahren zur Herstellung einer Membranelektrodenanordnung nach Anspruch 2, wobei die Dicke der Heißschmelzklebstoffschicht zwischen 1 Mikron und 100 Mikron liegt.

11. Verfahren zur Herstellung einer Membranelektrodenanordnung nach Anspruch 1, wobei die Gasdiffusionsschicht durch die folgenden Teilschritte hergestellt wird:
Sprühen oder Vakuuminfiltrieren von Polytetrafluorethylen in den aktiven Bereich des Substrats, bis die Konzentration des Polytetrafluorethylens in dem Substrat zwischen 1 % und 60 % liegt;
Trocknen bei einer Temperatur zwischen 340 °C und 360 °C für 20 Minuten bis 60 Minuten;
Mischen der ersten Harzes, Kohlenstoffs und Alkohols oder Wassers in einem Gewichtsverhältnis von 1~5 : 1~5 : 10 ~ 100 für 10 ~ 60 Minuten;
Behandeln mit Ultraschall für 10 Minuten bis 60 Minuten unter Bildung einer Mischung;
Eingeben der Mischung in den aktiven Bereich, bis die Konzentration des ersten Harzes im Substrat zwischen 0 % und 70 % liegt; und
Trocknen mit Hitze für 10 bis 100 Minuten unter Bildung einer Gasdiffusionsschicht.

## Revendications

1. Procédé de fabrication d'un ensemble d'électrodes à membrane, qui comprend les étapes consistant à :
fabriquer une couche de diffusion du gaz sur la région centrale active d'un substrat ;
couler un matériau de résine sur la région de rebord du substrat pour former une région d'étanchéité ;
presser à chaud le substrat ayant la couche de diffusion du gaz et la région d'étanchéité ; et
assembler au moins un dudit substrat ayant ladite couche de diffusion du gaz et ladite région d'étanchéité avec une membrane revêtue de catalyseur pour former ledit ensemble d'électrodes à membrane.

2. Procédé de fabrication d'un ensemble d'électrodes à membrane selon la revendication 1, qui comprend en outre l'étape consistant à fabriquer une couche d'adhésif thermofusible sur la région d'étanchéité, ladite couche d'adhésif thermofusible étant assemblée avec ledit substrat ayant ladite couche de diffusion du gaz et ladite région d'étanchéité et ladite membrane revêtue de catalyseur pour former ledit ensemble d'électrodes à membrane.

3. Procédé de fabrication d'un ensemble d'électrodes à membrane selon la revendication 1, ledit matériau de résine comprenant une ou plusieurs résines choisies dans le groupe constitué par: la polysulfone, les poly-éther-cétones, les polyamides, les polyimides, les polyoléfines, les fluoropolymères, et un polymère séquencé, et un ou plusieurs solvants choisis dans le groupe constitué par : les éthers, les sulfones, les cétones et les amides.

4. Procédé de fabrication d'un ensemble d'électrodes à membrane selon la revendication 1, dans lequel ledit matériau de résine est composé d'une résine fluorure de polyvinyléthylène et de diméthyl formamide.

5. Procédé de fabrication d'un ensemble d'électrodes à membrane selon la revendication 3 ou 4, dans lequel la concentration de la résine dans ledit matériau de résine est comprise entre 5 % en poids et 50 % en poids.

6. Procédé de fabrication d'un ensemble d'électrodes à membrane selon la revendication 1, dans lequel ladite étape de coulage comprend en outre les sous-étapes consistant à :
placer un moule pour ladite région de rebord sur ledit substrat, ledit moule ayant une ouverture correspondant à ladite région de rebord dudit substrat ;
aligner ladite ouverture dudit moule sur la région de rebord ;
verser ledit matériau de résine sur ladite région de rebord par ladite ouverture dans ledit moule ; et
volatiliser ledit matériau de résine pour former ladite région d'étanchéité.

7. Procédé de fabrication d'un ensemble d'électrodes à membrane selon la revendication 1, dans lequel ledit pressage à chaud est réalisé à une pression inférieure à 0,03 MPa.

8. Procédé de fabrication d'une électrode à membrane selon la revendication 2, la couche d'adhésif thermofusible étant fabriquée par pulvérisation, revêtement, sérigraphie, immersion ou égouttage d'un adhésif thermofusible sur la région d'étanchéité.

9. Procédé de fabrication d'une électrode à membrane selon la revendication 8, dans lequel l'adhésif thermofusible de ladite couche d'adhésif thermofusible est un ou plusieurs adhésifs choisis dans le groupe constitué par : les polyaminoesters, les polymères éthylène - acétate de vinyle et les polyamides.

10. Procédé de fabrication d'un ensemble d'électrodes à membrane selon la revendication 2, dans lequel l'épaisseur de ladite couche d'adhésif thermofusible est comprise entre 1 micron et 100 microns.

11. Procédé de fabrication d'un ensemble d'électrodes à membrane selon la revendication 1, dans lequel la couche de diffusion du gaz est fabriquée par les sous-étapes consistant à :
pulvériser ou infiltrer sous vide du polytétrafluoroéthylène dans ladite région active dudit substrat jusqu'à ce que la concentration dudit polytétrafluoroéthylène dans ledit substrat soit comprise entre 1 % et 60%;
sécher à une température comprise entre 340°C et 360°C pendant 20 minutes à 60 minutes ;
mélanger une première résine, du carbone, et de l'alcool ou de l'eau en un rapport en poids de 1~5/1~5/10~ 100 pendant 10~60 minutes ;
traiter avec des ultrasons pendant 10 minutes à 60 minutes pour former un mélange ;
placer ledit mélange dans ladite région active jusqu'à ce que la concentration de ladite première résine dans ledit substrat soit comprise entre 0 % et 70 % ; et
sécher avec de la chaleur pendant 10 à 100 minutes pour former une couche de diffusion du gaz.
